# EUROPÄISCHE PATENTSCHRIFT

(11) **EP 1 160 926 B1**
(45) Veröffentlichungstag und Bekanntmachung des Hinweises auf die Patenterteilung: **19.05.2004**
(21) Anmeldenummer: 01107661.9
(22) Anmeldetag: 28.03.2001
(51) Int. Cl.: H01R 13/24, G06K 7/00

(54) **Kontakt zur Aufnahme in einem Kontaktträger sowie zugehöriger Kontaktträger**
Contact for receiving in a contact carrier and corresponding contact carrier
Contact destiné à être maintenu dans un support de contacts et le support correspondant

(30) Priorität: 02.06.2000 DE 10027600
(43) Veröffentlichungstag der Anmeldung: 05.12.2001
(73) Patentinhaber: AMPHENOL-TUCHEL ELECTRONICS GmbH, D-74080 Heilbronn (DE)
(72) Erfinder: Schnell, Thomas, 74078 Heilbronn (DE); Maiterth, Eduard, 74074 Heilbronn (DE); Seidel, Volker, 74223 Flein (DE)
(74) Vertreter: Becker, Thomas, Dr., Dipl.-Ing.

(56) Entgegenhaltungen:
- EP-A- 0 810 689
- EP-A- 0 866 528
- DE-A- 19 829 551
- DE-U- 29 911 558
- US-A- 5 746 626

## Beschreibung

Die Erfindung betrifft einen Kontakt zur Aufnahme in einem Kontaktträger sowie einen zugehörigen Kontaktträger, der üblicherweise mehrere der vorgenannten Kontakte aufnimmt. Kontakte und Kontaktträger der vorgenannten Art werden beispielsweise in einem Chipkartenleser verwendet.

Üblicherweise sind die Kontakte mit einem Ende (im Bereich des sogenannten Führungsteils) zur Kontaktierung zugehöriger Leiterbahnen einer dem Kontaktträger zugeordneten gedruckten Schaltung ausgebildet und stehen mit ihrem anderen, freien Ende (welches entsprechend einem Kontaktteil zugeordnet wird) über die einer zugehörigen Chipkarte zugewandte Oberfläche des Kontaktträgers vor.

Derartige Kontakte und Kontaktträger sowie zugehörige Chipkartenleser und Chipkarten sind aus dem Stand der Technik bekannt (DE 41 18 312 C2; DE 44 11 345 C1).

In der DE 198 29 551 A1 wird ein Kontaktträger mit einem (elektrischen) Kontakt beschrieben, dessen Kontaktabschnitt in zwei Richtungen gewölbt ausgebildet ist, wodurch sich für den Kontaktabschnitt eine "löffelartige" Geometrie ergibt, weshalb diese Kontakte auch "Löffelkontakte" genannt werden. Dabei ist mindestens ein, an den jeweiligen Kontaktabschnitt anschließender Führungsabschnitt jedes Kontaktes so gestaltet und im Kontaktträger geführt, daß der entsprechende Kontakt ausschließlich entlang einer im wesentlichen senkrecht durch einen Scheitelpunkt des jeweiligen Kontaktabschnitts verlaufenden Achse bewegbar ist.

Ein gewisser Nachteil dieser Ausführungsform ergibt sich dann, wenn der Forderung nach einer möglichst geringen Bauhöhe des Kontaktträgers Rechnung getragen werden soll. Außerdem kann die Steckkraft einer zugeführten Chipkarte ein Moment im Führungsbereich des Kontaktabschnitts verursachen.

Ein Kontakt mit den Merkmalen des Oberbegriffes des Anspruchs 1 ergibt sich aus der EP 0 810 689 A2.

Der Erfindung liegt die Aufgabe zugrunde, einen Kontakt sowie einen zugehörigen Kontaktträger anzubieten, wobei der Kontakt auch im belasteten Zustand (nach Zuführung einer Chipkarte) möglichst ohne Kipp- und Drehmomente im Kontaktträger geführt werden kann und der Kontaktträger eine möglichst geringe Bauhöhe ermöglicht.

Dabei liegt der Erfindung folgende Erkenntnis zugrunde: Eine besonders sichere Führung des Kontaktes im Kontaktträger läßt sich mit einem Kontakt erreichen, dessen Kontaktteil am freien Ende hakenförmig umgebogen ist, dessen freies Ende also unterhalb des löffelartig gewölbten Kontaktabschnitts liegt und mit randseitig vorstehenden Flügeln zur Führung entlang korrespondierender Flächen im Kontaktträger ausgebildet ist.

Der zugehörige Kontaktträger ist dann im Bereich der genannten Flügel des Kontaktteils des Kontaktes mit Schrägflächen ausgebildet, entlang der die Flügel des Kontaktes im belasteten Zustand des Kontaktes spannungsfrei in Richtung auf einen darunterliegenden Führungsteil des Kontaktes gleiten können.

Auf diese Weise wird gleichzeitig eine Reduzierung der notwendigen Bauhöhe des Kontaktträgers erreicht. Dies wird unterstützt, indem der Führungsteil eine Öffnung aufweist, und zwar in einem Bereich, der in Verlängerung des Zwischenabschnitts und einer daran anschließenden Umbiegung im Abstand unterhalb des Kontaktteils verläuft und unterhalb des (löffelartig) gestalteten Kontaktabschnitts, wobei die Öffnung so groß ist, daß der hakenförmig gestaltete Endabschnitt des Kontaktteils im belasteten Zustand in die Öffnung eintauchen kann.

Die Öffnung schafft damit einen zusätzlichen Raum, in den der Kontaktabschnitt des Kontaktes versenkt werden kann, wenn der Kontakt durch die Steckkraft einer zugehörigen Chipkarte in den Kontaktträger hineingeführt wird.

In ihrer allgemeinsten Ausführungsform betrifft die Erfindung danach einen Kontakt zur Aufnahme in einem Kontaktträger, mit den Merkmalen des Hauptanspruches.

Beispielsweise ist der Kontaktabschnitt löffelartig geformt.

Der zugehörige Kontaktträger ist in seiner allgemeinsten Ausführungsform durch die Merkmale des Anspruchs 7 gekennzeichnet.

Um eine sichere Positionierung des Kontaktes im Kontaktträger sicherzustellen, kann der Führungsteil entlang seiner randseitigen Abschnitte in Richtung auf den Kontaktteil vorstehende Laschen aufweisen. Diese Laschen können zum Beispiel durch zwei Schnitte, nämlich senkrecht und parallel zum Rand des Führungsteils ausgebildet und anschließend nach oben aufgebogen werden, wie dies in der nachfolgenden Figurenbeschreibung näher erläutert wird.

Über die Laschen kann der Kontakt bei beiden genannten Ausführungsformen sicher und ortsfest im Kontaktträger nach der Montage festgelegt werden.

Dazu kann der Kontaktträger mit zwei, im wesentlichen parallel zum Führungsteil verlaufenden, randseitig den Raum zur Aufnahme des Kontaktes begrenzenden Führungsschlitzen ausgebildet werden, wobei die Höhe der Führungsschlitze maximal der Dicke des Führungsteils in seinem randseitigen Abschnitt entspricht, also bei einer Ausführungsform mit den genannten Laschen einschließlich der genannten Laschen.

Diese Ausführungsform läßt sich aber auch bei einem Kontakt ohne die genannten Laschen realisieren. In jedem Fall kann der Kontakt unter Haftreibung im Kontaktträger festgelegt werden.

Die Bauhöhe des Kontaktträgers kann weiter verringert werden, wenn der Kontaktträger in Verlängerung (unterhalb) der Öffnung des Führungsabschnittes des Kontaktes (1. Ausführungsform) eine korrespondierende Öffnung aufweist. Der Kontaktabschnitt des Kontaktes (sein umgebogenes freies Ende) kann so noch tiefer in den Kontaktträger eintauchen. Bei der 2. Ausführungsform des Kontakts (mit abgesenktem Führungsteil) kann durch eine korrespondierende Ausnehmung im Boden des Kontaktträgers für die Absenkung Platz geschaffen werden.

Wie eingangs beschrieben dient der Führungsteil des Kontaktes auch zur Kontaktierung zugehöriger Leiterbahnen einer dem Kontaktträger zugeordneten gedruckten Schaltung. Zu diesem Zweck kann der Führungsteil an seinem freien Ende eine doppelt umgebogene Verlängerung aufweisen, die auf eine korrespondierende Leiterbahn einer gedruckten Schaltung gelötet wird.

Das freie Ende des Führungsabschnitts kann aber auch hakenartig umgebogen werden, so daß das freie Ende im Bereich der Unterseite des Kontaktträgers verläuft und zwar vorzugsweise so, daß die Endabschnitte benachbarter Kontakte vorgespannt am Kontaktträger anliegen sowie plan und parallel zueinander verlaufen. Zur weiteren Verringerung der Bauhöhe des Kontaktträgers dient eine Ausführungsform, bei der der Kontaktträger eine nutförmige Vertiefung auf seiner Unterseite aufweist. Diese Vertiefung dient zur Aufnahme des genannten freien Endes des Führungsteil derart, daß das freie Ende des Führungsteils mit seiner Unterseite die Unterseite des Kontaktträgers überragt. Auch diese Ausführungsform wird in der Figurenbeschreibung näher erläutert.

Schließlich sieht eine Ausführungsform des Kontaktträgers vor, die genannten Schrägflächen benachbart zu seitlichen Endabschnitten der Flügel anzuordnen. Die Schrägflächen verlaufen jeweils unter einem Winkel zur Vertikalen und senkrecht zur Längsrichtung des korrespondierenden Kontaktes.

Weitere Merkmale der Erfindung ergeben sich aus den Merkmalen der Unteransprüche sowie den sonstigen Anmeldungsunterlagen. Die Erfindung wird nachstehend näher erläutert.

Dabei zeigen - jeweils in schematisierter Darstellung - :
- Figur 1a:: eine perspektivische Ansicht einer ersten Ausführungsform eines Kontaktes
- Figur 1b:: eine perspektivische Ansicht einer zweiten Ausführungsform eines Kontaktes
- Figur 2:: einen Längsschnitt durch einen Kontaktträger mit eingelegtem Kontakt
- Figur 3:: eine perspektivische Ansicht eines Kontaktträgers mit einem eingelegten Kontakt.

In den Figuren sind gleiche und gleichwirkende Bauteile mit gleichen Bezugsziffern dargestellt.

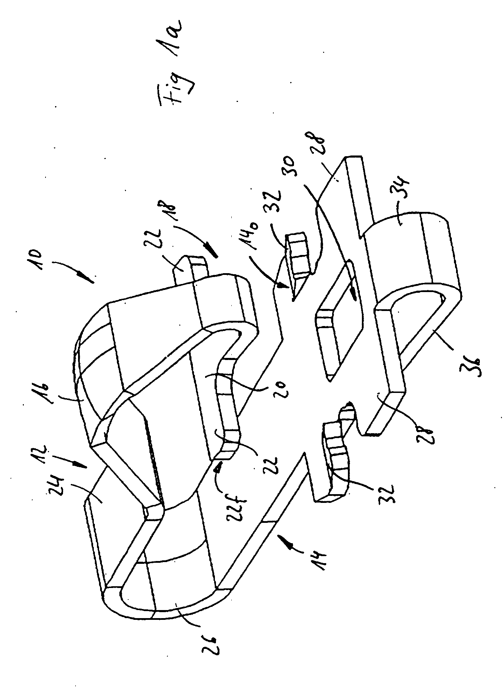

Figur 1a zeigt einen Kontakt 10 mit einem Kontaktteil 12 und einem Führungsteil 14.

Der Kontaktteil 12 weist einen löffelartig gestalteten Kontaktabschnitt 16 auf. An ein Ende des Kontaktabschnitts 16 schließt sich ein hakenförmig gestalteter Endabschnitt 18 an, dessen freies Ende unterhalb des Kontaktabschnitts 16 liegt und mit randseitig vorstehenden Flügeln 22 ausgebildet ist.

An das andere Ende des Kontaktabschnitts 16 schließt sich zunächst ein Zwischenabschnitt 24 an und danach eine Umbiegung 26 (ca. 180°), so daß der sich an die Umbiegung 26 anschließende Führungsteil 14 mit Abstand unterhalb des Kontaktteils 12 verläuft.

Der Führungsteil 14 ist im Abstand zur Umbiegung 26 verbreitert (durch Randbereiche 28) und weist in diesem Abschnitt eine mittige rechteckige Öffnung 30 auf.

In den Randbereichen 28 sind zwei Laschen 32 ausgeformt und über die Oberseite 14o des Führungsteils 14 aufgebogen. Dazu wurden zwei Schnitte senkrecht und parallel zu den äußeren Kanten der Randbereiche 28 durchgeführt

In Verlängerung des verbreiterten Bereiches erstreckt sich der Führungsteil 14 mit einem freien Ende 34, welches nach unten umgebogen ist (Umbiegung ca. 180°), so daß ein Endteil 36 im Abstand unterhalb des verbreiterten Abschnitts des Führungsteils 14 verläuft.

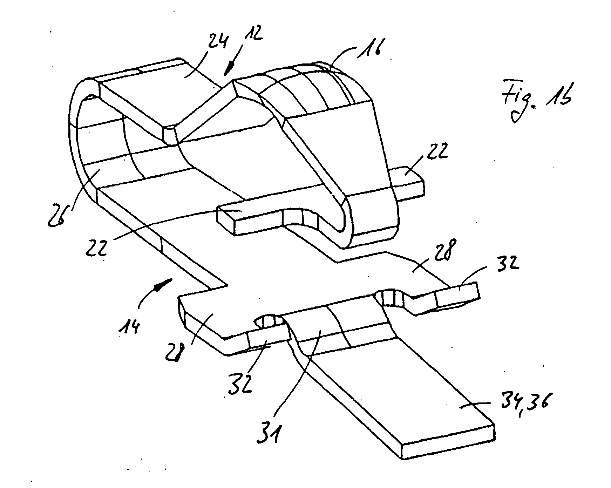

Beim Ausführungsbeispiel nach Figur 1b wird die Öffnung 30 durch eine Absenkung 31 des Führungsteils 14 ersetzt, die sich in den freien Endbereich 34 fortsetzt. Die Laschen 32 verlaufen beidseitig der Absenkung 31.

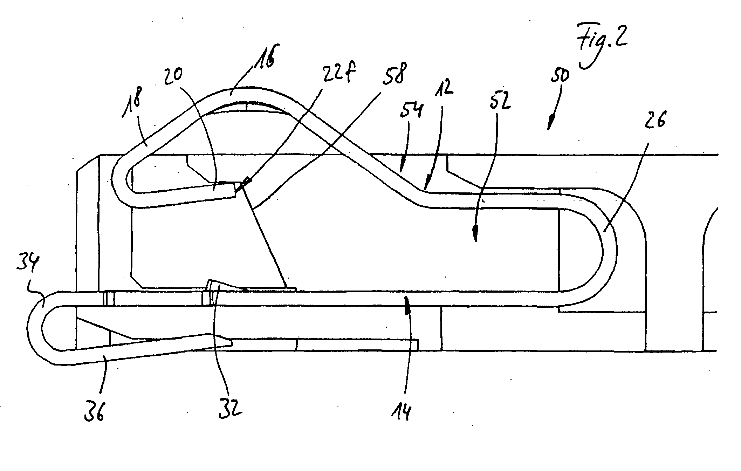

Figur 2 zeigt die Anordnung des Kontaktes 10 gemäß Figur 1a in einem Kontaktträger 50, der dazu einen Aufnahmeraum 52 für den Kontakt 10 aufweist und im oberen Abschnitt eine Öffnung 54 besitzt, durch die der Kontaktteil 12, insbesondere mit seinem Kontaktabschnitt 16, nach oben vorragen kann.

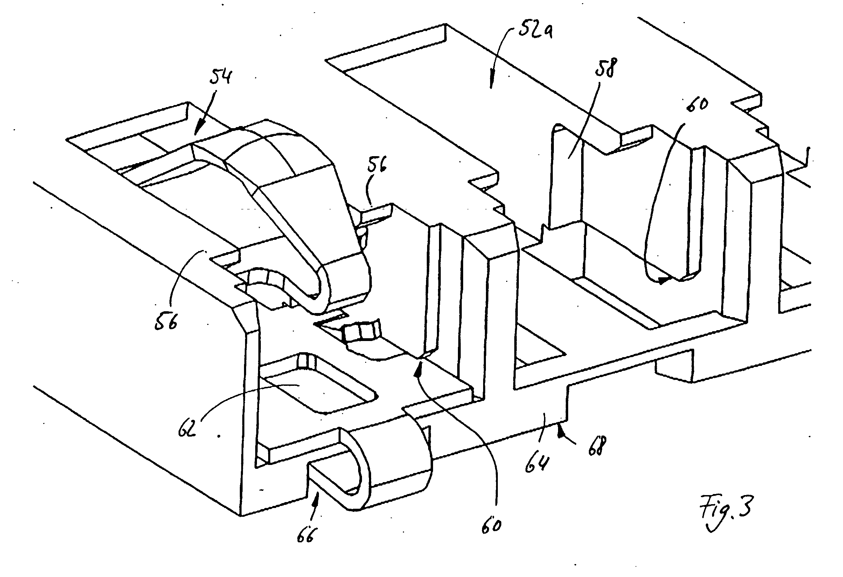

Der Endabschnitt 18 ist dabei so gestaltet und angeordnet, daß sein freies Ende 20 mit den Flügeln 22 von unten unter leichter Vorspannung gegen seitliche Begrenzungen 56 der Öffnung 54 anliegt. Gleichzeitig stoßen die Flügel 22 mit ihren stirnseitigen Flächen 22f gegen korrespondierende Schrägflächen 58, die unterhalb der seitlichen Begrenzungen 56 verlaufen, wie sich aus einer Zusammenschau der Figuren 2 und 3 ergibt.

Der Führungsteil 14 des Kontaktes 10 ist in seitlichen Führungsschlitzen 60 des Aufnahmeraums 52 konfektioniert. Die Führungsschlitze weisen eine Höhe auf, die geringfügig kleiner ist als die Höhe des Führungsteils 14 entlang der Randbereiche 28, einschließlich der vorstehenden Laschen 32, so daß der Führungsteil 14 spielfrei einliegt.

Gemäß Figur 3 wird der Kontakt 10 bei der Montage von rechts nach links in den Aufnahmeraum 52 geführt. Dadurch, daß das Verbindungsende der Laschen 32 mit den zugehörigen Randbereichen 28 an dem in Steckrichtung vorderen Ende liegt, kann der Kontakt 10 problemlos unter Haftreibung zugeführt werden. Er kann sich aber umgekehrt nicht wieder lösen, weil vorstehende Kanten der Laschen 32 sich dabei in die obere Begrenzungsfläche der Führungsschlitze 60 hineindrücken würden.

Unterhalb der Öffnung 30 ist der Kontaktträger 50 mit einer korrespondierenden Öffnung 62 ausgebildet. Im Aufnahmeraum 52a gemäß Figur 3, der ohne Kontakt gezeigt ist, fehlt diese Öffnung 62. Wird ein Kontakt gemäß Figur 1b verwendet kann die Öffnung 62 durch eine Ausnehmung im Boden des Kontaktträgers ersetzt werden, in die die Absenkung 31 hineinragt.

Im Bodenbereich 64 des Kontaktträgers 50 ist eine Nut 66 ausgebildet, die der Aufnahme des freien Endes 34 beziehungsweise des Endteils 36 des Kontaktes 10 dient, und zwar derart, daß der Endteil 36 über eine untere Stirnfläche 68 des Kontaktträgers 50 vorsteht, wie Figur 2 zeigt. Dabei kann die Anordnung so erfolgen, daß der Endteil 36 parallel zur unteren Stirnfläche 68 verläuft und damit exakt horizontal.

Wird eine Chipkarte dem Kontaktträger 50 zugeführt, so drückt die Chipkarte auf den Kontaktabschnitt 16, der entsprechend nach unten, in Richtung auf den Führungsteil 14, in den Aufnahmeraum 52 gedrückt wird. Bei dieser Bewegung wird das freie Ende 20 des Kontaktteils 12 entlang den Schrägflächen 58 geführt, wodurch gleichzeitig die Steckkraft der Karte im kritischen Anfangszeitpunkt aufgenommen wird. Entsprechend kann durch die Steckkraft der Karte kein Moment mehr in der Einspannstelle des Kontaktes 10 erzeugt werden.

Beim weiteren Absenken des Kontaktabschnittes 16 taucht der Endabschnitt 18 in die Öffnung 30 des Führungsteils 14 beziehungsweise in die Öffnung 62 des Kontaktträgers 50 ein,(bei der Ausführungsform nach den Figuren 2, 3) so daß dieser Raum genutzt wird, um die Bauhöhe des Kontaktträgers 50 insgesamt auf ein Minimum zu beschränken. Die Schrägflächen 58 unterstützen eine sichere, momentenfreie Führung des Endabschnitts 18 bis in den Bereich der Öffnung(en) 30, 62.

In gleicher Weise wird auch bei Verwendung eines Kontakts nach Figur 1b ein zusätzlicher Raum für den Kontaktabschnitt 1b beim Absenken geschaffen, und zwar durch die Absenkung 31.

## Patentansprüche

1. Kontakt (10) zur Aufnahme in einem Kontaktträger (50), mit folgenden Merkmalen:
1.1 der Kontakt (10) besitzt einen, in einem unteren Abschnitt des Kontaktträgers (50) ortsfest montierbaren Führungsteil (14), und
1.2 einen, in einem oberen Abschnitt des Kontaktträgers (50) beweglich montierbaren Kontaktteil (12),
1.3 der Kontaktteil (12) weist einen, im unbelasteten Zustand durch eine Öffnung (54) im oberen Abschnitt des Kontaktträgers (50) vorstehenden, nach außen gewölbten Kontaktabschnitt (16) auf, an den sich auf einer Seite über einen Zwischenabschnitt (24) der Führungsteil (14) anschließt und an den sich auf einer gegenüberliegenden Seite ein hakenförmig gestalteter Endabschnitt (18) anschließt, **gekennzeichnet durch** folgende Merkmale:
1.4.der Führungsteil (14)verläuft, in Verlängerung des Zwischenabschnitts (24) und einer daran anschließenden Umbiegung (26), im Abstand unterhalb des Kontaktteils (12) und weist unterhalb des Kontaktabschnitts (16) eine Öffnung (30) auf, die so groß ist, daß der hakenförmig gestaltete Endabschnitt (18) des Kontaktteils (12) im belasteten Zustand in die Öffnung (30) eintauchen kann.

2. Kontakt nach Anspruch 1, dessen Führungsteil (14) entlang seiner randseitigen Abschnitte (28) auf den Kontaktteil (12) vorstehende Laschen (32) aufweist.

3. Kontakt nach Anspruch 1, dessen Führungsteil (14) an seinem freien Ende (34) nach unten umgebogen ist.

4. Kontakt nach Anspruch 1, dessen Kontaktabschnitt (16) löffelartig gewölbt ist.

5. Kontakt nach Anspruch 1, dessen freies Ende (20) unterhalb des gewölbten Kontaktabschnittes (16) liegt.

6. Kontakt nach Anspruch 1, dessen freies Ende (20) mit randseitig vorstehenden Flügeln (22) zur Führung im Kontaktträger (50) ausgebildet ist.

7. Kontaktträger (50) mit einem Aufnahmeraum (52) zur Aufnahme mindestens eines Kontaktes (10) nach Anspruch 6, mit einer Öffnung (54) im oberen Abschnitt, durch die der Kontakt (10) mit seinem Kontaktabschnitt (16) im unbelasteten Zustand hindurchragt und im Bereich der Flügel (22) des Kontaktteils (12) angeordneten, den Aufnahmeraum (52) für den Kontakt (10) begrenzenden Schrägflächen (58), entlang der die Flügel (22) des Kontaktes (10) im belasteten Zustand des Kontaktabschnitts (12) spannungsfrei in Richtung auf den Führungsteil (14) des Kontaktes (10) gleiten.

8. Kontaktträger nach Anspruch 7, bei dem die Schrägflächen (58) benachbart zu seitlichen Endabschnitten der Flügel (22) verlaufen.

9. Kontaktträger nach Anspruch 7 mit einer Öffnung (62) in Verlängerung der Öffnung (30) des Führungsabschnitts (14) des Kontaktes (10).

10. Kontaktträger nach Anspruch 7 mit zwei im wesentlichen parallel zum Führungsteil (14) verlaufenden, randseitig den Aufnahmeraum (52) begrenzenden Führungsschlitzen (60), deren Höhe maximal der Dicke des Führungsteils (14) in seinen randseitigen Abschnitten (28) entspricht.

11. Kontaktträger nach Anspruch 7 mit einer nutförmigen Vertiefung (66) entlang seiner unteren Stirnfläche (68) zur Aufnahme eines freien Endes (36) des Führungsteils (14) des Kontaktes (10) derart, daß das freie Ende (36) des Führungsteils (14) mit seiner Unterseite die untere Stirnfläche (68) des Kontaktträgers (50) überragt.

12. Kontaktträger nach Anspruch 7 der unterhalb einer Absenkung (31) des Führungsteils (14) des Kontakts (10) eine korrespondierende Ausnehmung aufweist.

13. Kontaktträger nach Anspruch 7, bei dem die Kontaktflügel (22) gegen korrespondierende Begrenzungen (56) des Kontaktträgers unterseitig anliegen.

## Claims

1. Contact (10) for receiving in a contact carrier (50), having the following features:
1.1. the contact (10) has a guide part (14), which is mountable in a stationary manner in a lower portion of the contact carrier (50), and
1.2. a contact part (12), which is mountable in a movable manner in an upper portion of the contact carrier (50),
1.3. the contact part (12) comprises an outwardly curved contact portion (16), which in the unloaded state projects through an opening (54) in the upper portion of the contact carrier (50) and is adjoined at one side via an intermediate portion (24) by the guide part (14) and at an opposite side by an end portion (18) of a hook-shaped design, **characterized by** the following features:
1.4. the guide part (14) extends, in extension of the intermediate portion (24) and an adjoining reverse bend (26), at a distance below the contact part (12) and has below the contact portion (16) an opening (30), which is large enough for the hook-shaped end portion (18) of the contact part (12) in the unloaded state to engage into the opening (30).

2. Contact according to claim 1, the guide part (14) of which has along its marginal portions (28) lugs (32), which project onto the contact part (12).

3. Contact according to claim 1, the guide part (14) of which at its free end (34) is bent round in a downward direction.

4. Contact according to claim 1, the contact portion (16) of which is curved in a spoon-like manner.

5. Contact according to claim 1, the free end (20) of which lies below the curved contact portion (16).

6. Contact according to claim 1, the free end (20) of which is designed with marginally projecting wings (22) for guidance in the contact carrier (50).

7. Contact carrier (50) having a receiving space (52) for receiving at least one contact (10) according to claim 6, having an opening (54) in the upper portion, through which opening the contact (10) projects with its contact portion (16) in the unloaded state, and having oblique surfaces (58), which are disposed in the region of the wings (22) of the contact part (12) and delimit the receiving space (52) for the contact (10) and along which the wings (22) of the contact (10) in the unloaded state of the contact portion (16) slide free of stress in the direction of the guide part (14) of the contact (10).

8. Contact carrier according to claim 7, in which the oblique surfaces (58) extend adjacent to lateral end portions of the wings (22).

9. Contact carrier according to claim 7 having an opening (62) in extension of the opening (30) of the guide portion (14) of the contact (10).

10. Contact carrier according to claim 7 having two guide slots (60), which extend substantially parallel to the guide part (14) and delimit the margins of the receiving space (52) and the height of which corresponds at most to the thickness of the guide part (14) in its marginal portions (28).

11. Contact carrier according to claim 7 having a groove-shaped indentation (66) along its bottom end face (68) for receiving a free end (36) of the guide part (14) of the contact (10) in such a way that the free end (36) of the guide part (14) projects with its underside above the bottom end face (68) of the contact carrier (50) .

12. Contact carrier according to claim 7, which below a depression (31) of the guide part (14) of the contact (10) has a corresponding recess.

13. Contact carrier according to claim 7, in which the contact wings (22) lie at the underside against corresponding boundaries (56) of the contact carrier.

## Revendications

1. Contact (10) destiné à être maintenu dans un support de contacts (50), présentant les caractéristiques suivantes :
1.1 le contact (10) est muni d'une pièce de guidage (14) qui peut être montée de manière fixe sur le tronçon inférieur du support de contacts (50), et
1.2 d'une pièce de contact (12) qui peut être montée de manière mobile sur le tronçon supérieur du support de contacts (50),
1.3 la pièce de contact (12) présente un tronçon de contact (16) courbé vers l'extérieur, et saillant, lorsqu'il est non sollicité, à travers une ouverture (54) dans le tronçon supérieur du support de contacts (50), lequel est prolongé d'un côté, au moyen d'un tronçon intermédiaire (24), par la pièce de guidage (14), et du côté opposé par un tronçon d'extrémité (18) conçu en forme de crochet, **caractérisé par** les points suivants :
1.4 la pièce de guidage (14) est située dans le prolongement du tronçon intermédiaire (24) et d'un recourbement (26) contigu à ce dernier, à distance sous la pièce de contact (12) et présente sous le tronçon de contact (16) une ouverture (30) dont la dimension permet au tronçon d'extrémité (18) de la pièce de contact (12), conçu en forme de crochet, de s'engager dans l'ouverture lors d'une sollicitation.

2. Contact selon la revendication 1, dont la pièce de guidage (14) présente le long de ses tronçons (28) périphériques sur la pièce de contact (12) des languettes (32) en saillies.

3. Contact selon la revendication 1, dont la pièce de guidage (14) est recourbée vers le bas au niveau de son extrémité libre (34).

4. Contact selon la revendication 1, dont le tronçon de contact (16) est bombé à la manière d'une cuillère.

5. Contact selon la revendication 1, dont l'extrémité libre (20) est située sous le tronçon de contact (16) bombé.

6. Contact selon la revendication 1, dont l'extrémité libre (20) est conformée avec des ailettes (22) proéminentes en périphérie à des fins de guidage dans le support de contacts (50).

7. Support de contacts (50) avec un espace de maintien (52) destiné à maintenir au moins un contact (10) selon la revendication 6, comportant une ouverture (54) dans le tronçon supérieur, à travers laquelle passe, lorsqu'il n'est pas sollicité, le contact (10) avec ses tronçons de contact (16) et comportant, au niveau des ailettes (22) de la pièce de contact (12), des surfaces inclinées (58), contiguës à l'espace de maintien (52) du contact (10), le long desquelles les ailettes (22) du contact (10) glissent vers la pièce de guidage (14) du contact (10) en restant exemptes de tension, lorsque le tronçon de contact (12) est sollicité.

8. Support de contacts selon la revendication 7, dans lequel les surfaces inclinées (58) s'étendent de manière contiguë aux tronçons d'extrémité latéraux des ailettes (22).

9. Support de contacts selon la revendication 7 comportant une ouverture (62) dans le prolongement de l'ouverture (30) du tronçon de guidage (14) du contact (10).

10. Support de contacts selon la revendication 7 comportant deux fentes de guidage (60), s'étendant de manière sensiblement parallèle à la pièce de guidage (14) délimitant en périphérie l'espace de maintien (52), et dont la hauteur maximale correspond à l'épaisseur de la pièce de guidage (14) dans ses tronçons (28) périphériques.

11. Support de contacts selon la revendication 7 avec une cavité (66) en forme de rainure le long de sa surface frontale (68) inférieure afin de maintenir une extrémité libre (36) de la pièce de guidage (14) du contact (10), de telle sorte que l'extrémité libre (36) de la pièce de guidage (14) dépasse par la face inférieure de la surface frontale (68) inférieure du support de contacts (50).

12. Support de contacts selon la revendication 7 qui présente sous un abaissement (31) de la pièce de guidage (14) du contact (10) un évidement correspondant.

13. Support de contacts selon la revendication 7 dans lequel les ailettes de contact (22) sont en contact par le bas avec les limitations (56) correspondantes du support de contacts.
